Europäisches Patentamt

European Patent Office

Office européen des brevets

(11) Veröffentlichungsnummer: **0 064 573**
**A1**

(12) **EUROPÄISCHE PATENTANMELDUNG**

(21) Anmeldenummer: 81105772.8

(22) Anmeldetag: 22.07.81

(51) Int. Cl.³: **B 23 C 3/00**
**B 24 B 1/00, B 21 D 47/00**

(30) Priorität: 11.05.81 DE 3118640

(43) Veröffentlichungstag der Anmeldung:
17.11.82 Patentblatt 82/46

(84) Benannte Vertragsstaaten:
BE DE FR GB IT NL

(71) Anmelder: PD - Pries Drucklufttechnik GmbH
Rahlau 28
D-2000 Hamburg 65(DE)

(72) Erfinder: Pries, Hans
Westerlandstrasse 16
D-2000 Hamburg 70(DE)

(74) Vertreter: Walenda, Hans, Dipl.Ing. Dr. techn.
Berner Weg 28
D-2000 Hamburg 65(DE)

(54) Verfahren und Vorrichtung zur Oberflächenbearbeitung von Leichtbauwaben.

(57) Bei einem Verfahren zur Profilgebung von Leichtbauwabenkörpern durch Fräsen oder Schleifen wird während der Bearbeitung in die leeren Zellen des Wabenkörpers Druckluft unter einem Druck von mehreren bar, z.B. 6 bis 8 bar, eingeblasen, wodurch der Wabenkörper während der Bearbeitung versteift und stabilisiert wird. Besonders angepaßte, z.B. aus mehreren nebeneinander auf einer mit einer Druckluftzuführung verbundenen Achse (6) befestigten Frässcheiben (5) mit radialen Bohrungen (14) bestehende Vorrichtungen ermöglichen es, den Wabenkörpern beliebige, auch komplizierte Formen in einem einzigen Arbeitsgang zu verleihen.

Fig.4

Fig.5

EP 0 064 573 A1

Verfahren und Vorrichtung zur Oberflächenbearbeitung von Leichtbauwaben

Im Flugzeugbau ist es üblich, anderweitig nicht benötigte Hohlräume von Bauteilen wie Hohlräume von Rudern, Spoilern, z. B.
Landeklappen und Vorflügeln und die nicht für die Unterbringung
von Treibstofftanks benötigten Teile von Hohlräumen der Tragflächen mit Waben aus dünnem Alu-Blech, Kunststoff oder kunststoffgetränktem Papier, z. B. phenolharzgetränktem Polyamidpapier auszufüllen, da diese Waben bei geringstem Gewicht eine sehr hohe Festigkeit, insbesondere Steifheit in der Richtung senkrecht zu den Sechseckzellen der Waben besitzen und daher diese Festigkeit bzw. Steifheit
den mit ihnen ausgefüllten Bauteilen verleihen. Da diese Waben zur
optimalen Erfüllung ihrer Aufgabe beidseitig mit den Wänden des von
ihnen ausgefüllten Bauteiles verklebt sein müssen und diese Bauteile
häufig aus aerodynamischen und konstruktiven Gründen mehr oder weniger
komplizierte Formen haben, müssen die Waben vor dem Einbringen und
Einkleben in die Bauteile sehr genau diesen Formen angepaßt werden,
was eine entsprechende Bearbeitung ihrer Oberfläche erfordert.

Diese Konturgebung stellt ein bis heute nicht befriedigend gelöstes
Problem im gesamten Flugzeugbau dar.

Die aus ziemlich kleinen Zellen mit Sechseckdurchmessern (Wabenweiten)
von etwa 3 bis 1,0 mm und Wandstärken von 20 bis 200 $\mu$, üblicherweise
etwa 20 bis 150 $\mu$ zusammengesetzten Waben sind nämlich außer in der Richtung senkrecht zu den Sechseckflächen so weich und nachgiebig, daß die sonst üblichen Methoden der Oberflächenbearbeitung wie Fräsen oder Schleifen hier versagen, weil sie die Zellenwände eindrücken und ausbiegen und weil sie zur Gratbildung an den neu geschaffenen Rändern der Zellwände führen, was wieder das nachfolgende Einkleben an den Innenseiten der Bauteilwände beeinträchtigt oder wesentlich erschwert.

Die Konturgebung der Oberflächen solcher Waben erfolgt daher bis heute nur durch Sägen mit dünnen Sägeblättern, d. h. Kreissägescheiben von weniger als 1 mm Dicke, z. B. Dicken von 0,5 mm, entweder von Hand oder mit einem computergesteuerten in drei Dimensionen verstellbaren ebenso dünnen Kreissägeblatt. Beide Verfahren sind äußerst aufwendig, das eine wegen hoher Arbeits- und das andere wegen noch höherer Investitionskosten.

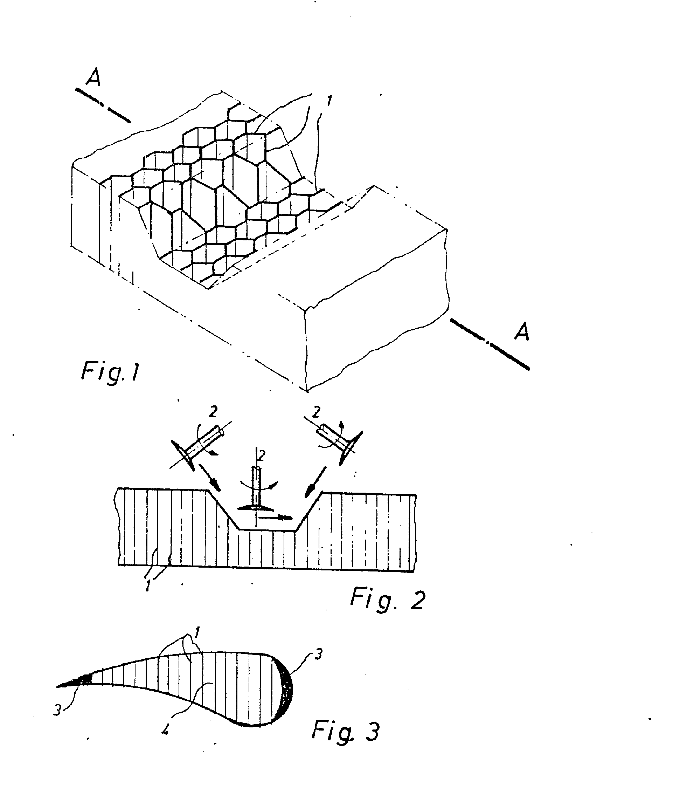

So erfordert schon die Herstellung einer einfachen geraden Rinne gemäß den Figuren 1 und 2 drei zeitlich aufeinanderfolgende Sägeschnitte in drei verschiedenen Richtungen. Dabei ist Figur 1 die isometrische Darstellung eines Teilschnittes und Figur 2 ein Schnitt längs der Linie A - A der Figur 1. 1 sind die Zellwände und 2 die verschiedenen Stellungen der Kreissäge.

Noch viel aufwendiger ist die Herstellung des in Figur 3 dargestellten Wabenkörpers. Diese Figur ist ein Schnitt durch einen Spoiler, dessen Randteile 3 z. B. voll ausgegossen sind und dessen Hohlraum 4 durch die Wabe 1 ausgefüllt ist.

Dieser Wabenkörper muß, wenn er nicht von Hand aus dem Vollen gesägt wird, in vielen aufeinanderfolgenden computergesteuerten Sägeschnitten millimeterweise oder in noch kleineren Teilschritten hergestellt werden.

Ein weiterer, mindestens ebenso schwerwiegender Nachteil der bekannten Verfahren zur Formgebung von Wabenkörpern besteht darin, daß es - besonders, aber nicht ausschließlich - für die Bearbeitung dünn- und/oder weichwandiger Waben notwendig ist, die Wabenzellen vor der mechanischen Bearbeitung dadurch zu versteifen, daß sie mit einer Flüssigkeit wie Wasser, flüssige Seife, geschmolzenem Wachs oder Polyglykol ausgegossen werden, die Flüssigkeit durch einen Kältestoß zum Erstarren gebracht und nach der mechanischen Bearbeitung durch Sägen oder Fräsen wieder ausgeschmolzen wird. Die zusätzlichen Verfahrensschritte des Ausgießens und Einfrierens vor, des Ausschmelzens und Beseitigens der Ausgießmasse nach sowie die außerdem oft notwendige Kühlung während der Bearbeitung erfordern einen erheblichen Aufwand an Anlagen, Energie und Arbeitszeit. Bei Verwendung von Wasser oder wässerigen Lösungen bzw. Emulsionen kommt der weitere Nachteil hinzu, daß das Eis durch die Wärmeentwicklung während der Bearbeitung dazu neigt, wenigstens teilweise zu schmelzen, was Korrosionsprobleme verursacht und die Verwendung von Werkzeugen aus nichtrostendem Edelstahl notwendig macht, was die Kosten weiter verteuert. Aus diesem Grunde werden üblicherweise anstatt Wasser oder wässerigen Lösungen verschiedene Wachse oder Polyglykole zum Ausgiessen der Wabenkörper verwendet. Das bringt aber den Nachteil mit sich, daß die Beseitigung der letzten Reste dieser Substanzen nach dem Ausschmelzen schwierig und doch nie absolut gesichert ist, was wieder zu Störungen beim anschließenden Einkleben in die Flugzeugteile führt. Deshalb lehnen die Flugzeugwerke häufig die Abnahme von Wabenkörpern ab, die nach dem Ausgießverfahren unter Verwendung von Wachsen, Polyglykolen, Seife o. dgl. bearbeitet worden sind.

Die vorliegende Erfindung betrift ein Verfahren und zu seiner Durchführung geeignete Vorrichtungen, die es gestatten, auch den dünnsten und fragilsten
Wabenkörpern, selbst solchen aus relativ weichem Material, ohne Ausgießen der
Wabenzellen mit einer erstarrenden Flüssigkeit auf mechanischem Wege u.zw. nicht
nur durch Fräsen oder Sägen, sondern auch durch Schleifen jede gewünschte Oberflächenkontur zu verleihen und dabei absolut saubere und gratfreie Oberflächen
von bisher unübertroffener Qualität zu schaffen. Bevorzugte Ausführungsformen der
Erfindung ermöglichen es darüber hinaus, diese Formgebung in wenigen Verfahrensschritten, vorzugsweise sogar in einem einzigen Verfahrensschritt zu bewirken.

Die Erfindung besteht im Wesentlichen darin, während der Bearbeitung des Wabenkörpers in dessen leere Zellen Luft einzublasen u.zw. unter wesentlich höherem
Druck als dem, unter dem bei der Oberflächenbearbeitung kompakter Werkstücke oft
Luft auf die Werkstückoberfläche zwecks Entfernung des Schleifstaubes aufgeblasen
wird. Während bei diesen bekannten Verfahren nur soviel Überdruck angewendet wird
wie zur Aufrechterhaltung eines ausreichenden Luftstromes notwendig ist, also
meist einige cm WS und in jedem Falle weit weniger als 1 bar, sind zur Erzielung
des erfindungsgemäßen Effektes Drücke von mindestens 1 und meist von mehreren bar
notwendig.Vorzugsweise wird ein Druck von 6 bis 8 bar, gelegentlich auch 10 bar
und darüber angewendet. Durch diese Maßnahme wird nicht nur die Abfuhr der Schleifspäne begünstigt, sondern vor allem auch die Wabe stabilisiert und ein Vibrieren
derselben auch ohne Ausgießen mit einer erstarrenden Flüssigkeit verhindert, so
daß auch unausgegossene Waben mit besonders dünn- und weichwandigen Zellen ohne
Verformung derselben und unter Gewinnung sauberer gratfreier Oberflächen
bearbeitet werden können.

Die Erfindung ist nachstehend an Hand einiger Ausführungsbeispiele näher erläutert.

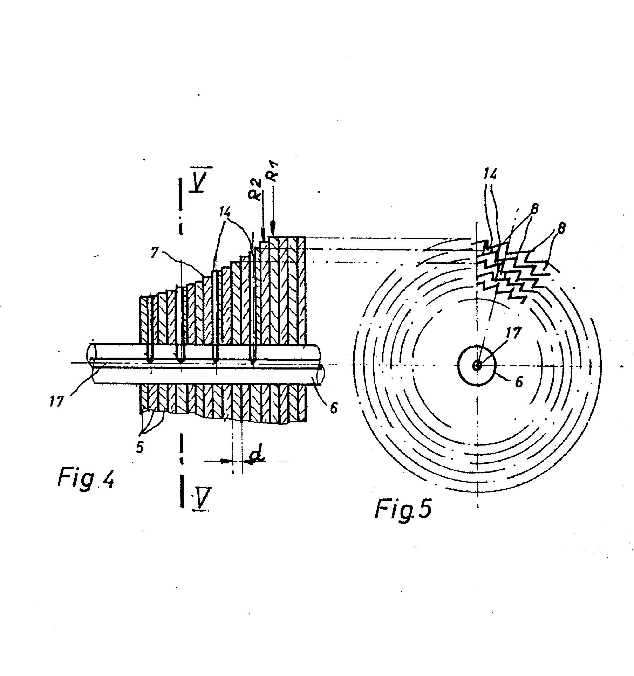

Die Figuren 4 und 5 betreffen eine Ausführungsform der Erfindung, bei der die
mechanische Bearbeitung durch Fräsen erfolgt und eine zu ihrer Durchführung
geeignete Vorrichtung.

0064573

Figur 4 ist ein Längsschnitt und Figur 5 die Ansicht des Schnittes V - V der Figur 4 von links gesehen.

Mit dem dargestellten Werkzeug kann dem Wabenkörper ohne Ausgießung seiner Zellen in einem einzigen Arbeitsgang grundsätzlich jede beliebige Oberflächenkontur gegeben werden, im dargestellten Beispiel die Kontur der Kurve 7. Das in diesem Besipiel dargestellte Fräsen mit Sägeschnitt, bei dem die nebeneinander angeordneten Frässcheiben gegeneinander versetzt sind, ist ganz allgemein vorteilhaft, besonders aber für die Bearbeitung von weniger robusten Wabenkörpern, vor allem solchen aus besonders weichem Material.

Die Herstellung eines solchen Werkzeuges kann in der Weise erfolgen, daß eine Anzahl von Scheiben 5 mit radialen Bohrungen 14 aus geeignetem Werkzeugstahl, z.B. HSS-Stahl, nebeneinader auf einer mit einer axialen Bohrung 17 versehenen Achse 6 so befestigt werden, daß ihre radialen Bohrungen 14 in die axiale Bohrung 17 der Achse 6 münden. Hierauf wird die Gesamtheit der Scheiben 5 zu einem Rotationskörper abgeschliffen, dessen Axialschnitt die dem Wabenkörper zu verleihende Kontur 7 hat. Die auf die verschiedenen durch diese Bedingung festgelegten Radien $R_1$, $R_2$ ...... $R_n$ abgeschliffenen Scheiben 5 werden, nachdem in den Umfang jeder einzelnen die Fräszähne 8 eingeschliffen worden sind, wieder in der ursprünglichen Reihenfolge auf der Achse 6 so befestigt, daß wieder ihre Bohrungen 14 in die Bohrung 17 der Achse 6 münden und die Zähne 8 jeder Scheibe 5 gegenüber denen der Nachbarscheiben versetzt sind, wie in Figur 5 dargestellt. Schließlich wird die Bohrung 17 der Achse 6 mit einer - nicht dargestellten - Druckluftzuführung verbunden.

Die Dicke d der einzelnen Frässcheiben 5 sollte, besonders für die Bearbeitung empfindlicherer Wabenkörper klein u. zw. nicht größer als 2 mm und vorzugsweise höchstens 1mm oder weniger betragen.

Gemäß einer anderen Ausführungsform der Erfindung kann an Stelle eines Werkzeuges mit in den Werkzeugstahl eingeschnittenen Fräs- oder Sägezähnen auch ein solches verwendet werden, bei dem die eingeschnittenen Zähne durch auf einem Grundkörper aufgebrachte äußerst harte Schleifkörner wie Carborundum- oder vorzugsweise Diamantstaub oder -splitter ersetzt sind. Diese Ausführungsform ist besonders vorteilhaft für Oberflächenbearbeitungen, bei denen das Bearbeitungswerkzeug um eine Achse senkrecht zur Wabenoberfläche rotiert und dabei gegebenenfalls parallel zu dieser Oberfläche bewegt wird, etwa um eine mehr oder weniger lange Einkerbung gemäß Figur 1 zu erzeugen. Ein für diese Ausführungsform der Erfindung ist beispielsweise in den Figuren 6 und 7 dargestellt.

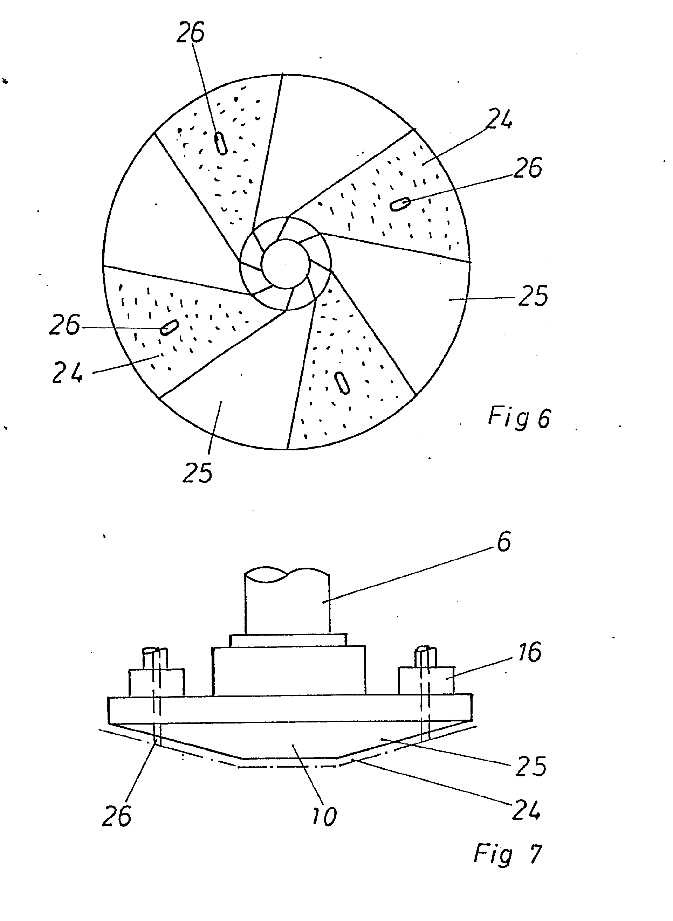

Figur 6 ist die Ansicht des Werkzeuges von unten und
Figur 7 ein senkrechter Schnitt.

6 ist wieder die - in diesem Falle senkrechte - Drehachse, auf der der rotierbare Schleifkonus 10 montiert ist. Seine für die Bearbeitung bestimmte Unterseite besteht aus einer Anzahl von mit Schleifmittelkörnern oder -splittern besetzten Flächen 24 und abwechselnd zwischen diesen angeordneten schleifmittelfreien Flächen 25, die etwas tiefer, z. B. etwa 1 mm tiefer liegen als die schleifmittelbesetzten Flächen 24. Die schleifmittelfreien Flächen 25 haben vorzugsweise größenordnungsmäßig etwa die gleiche Ausdehnung wie die schleifmittelbesetzten 25. Die mit der Druckluftzuführung 16 verbundenen Luftzuführungskanäle 26 münden vorzugsweise in den schleifmittelbesetzten Flächen 24. Die Begrenzungslinien 27 zwischen den Flächen 24 und 25 verlaufen vorzugsweise nicht radial sondern in einem gewissen Winkel zu den Radien, der zweckmäßig in den Grenzen zwischen $30^{\circ}$ und $45^{\circ}$ liegt.

Das Schleifmittel soll zweckmäßig weder zu fein noch zu grobkörnig sein. Die optimale Körnung hängt von den Eigenschaften des Materials des zu bearbeitenden Wabenkörpers ab und liegt im allgemeinen in den Grenzen von 150 bis 400 nach

0064573

DIN 848. Für die meisten Zwecke ist der Bereich von etwa 180 bis 250 DIN 848 optimal.

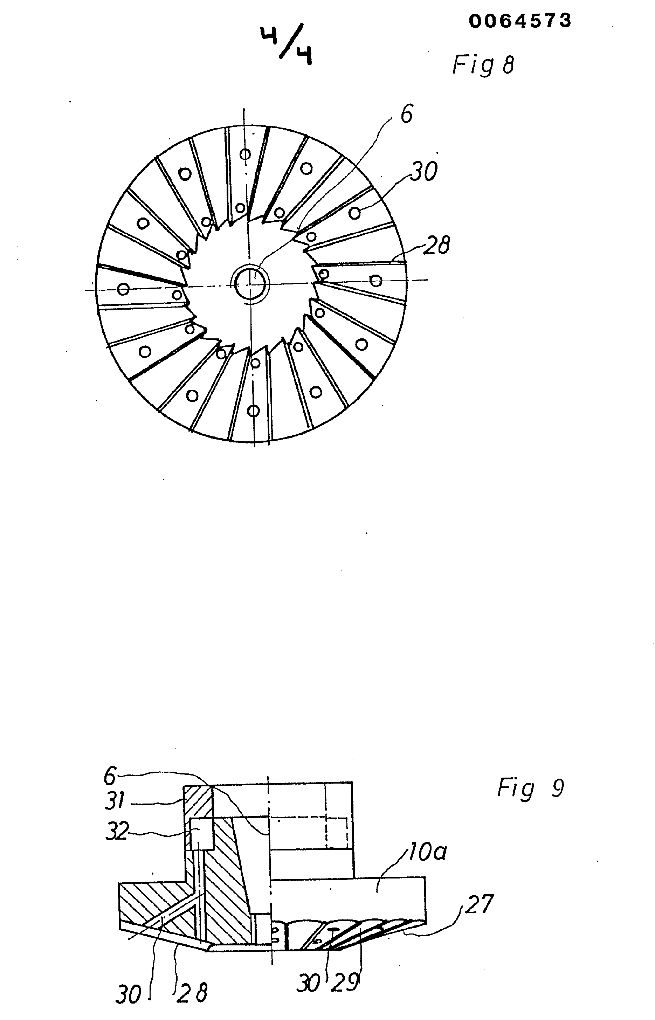

Eine für das erfindungsgemäße Verfahren geeignete Abänderung des bekannten Winkelstirnfräsers ist in den Figuren 8 und 9 dargestellt.

Figur 8 ist wieder die Ansicht des Werkzeuges von unten und Figur 9 ein senkrechter Schnitt.

6 ist die z.B. senkrechte Drehachse, auf der der Winkelstirnfräser 10a montiert ist. Seine für die Bearbeitung bestimmten Flächen 27 sind in an sich für Winkelstirnfräser bekannter Weise mit Zähnen 28 versehen. In mindestens einem Teil der Zahnlücken 29 sind Bohrungen 30 angebracht, die an die Druckluftzuführung 31 angeschlossen sind. Die Luftkammer 32 ist vorzugsweise als umlaufender Ring ausgebildet und die Zähne 28 sind vorzugsweise in einem Winkel zu den Radien angeordnet.

Sowohl für die erfindungsgemäße Bearbeitung durch Fräsen oder Sägen wie auch durch Schleifen ist es vorteilhaft, hohe Schnittgeschwindigkeiten, nämlich etwa 30 bis 100 m/sec, vorzugsweise 40 bis 80, insbesondere 50 bis 60 m/sec. einzuhalten.

P A T E N T A N S P R Ü C H E

1. Verfahren zur Profilgebung von Leichtbauwabenkörpern durch mechanische Bearbeitung, vorzugsweise Fräsen oder Schleifen, dadurch gekennzeichnet, daß während der mechanischen Bearbeitung des Wabenkörpers in dessen Zellen Druckluft unter einem Druck von minestens 1 bar, vorzugsweise bis zu 10 bar, eingeblasen wird.

2. Verfahren nach Anspruch 1, dadurch gekennzeichnet, daß die Druckluft unter einem Druck von mehreren bar, vorzugsweise unter einem Druck von 6 bis 8 bar eingeblasen wird.

3. Vorrichtung zur Durchführung des Verfahrens nach den Ansprüchen 1 und 2, dadurch gekennzeichnet, daß sie mehrere nebeneinander auf einer gemeinsamen hohlen rotierbaren Welle (6) befestigte Frässcheiben (5) mit gegeneinander versetzten Fräszähnen (8) enthält, die mit radialen Bohrungen (14) versehen sind, welche über die hohle Welle (6) mit einer Druckluftzuführung in Verbindung stehen, wobei die Umfänge der nebeneinander auf der Welle (6) befestigten Frässcheiben (5) einen Rotationskörper bilden, dessen Axialschnitt der Kontur (7) entspricht, welche dem zu bearbeitenden Wabenkörper verliehen werden soll und insbesondere das Profil eines im Flugzeugbau vorkommenden Bauteiles wiedergibt.

4. Verfahren zur Herstellung eines Werkzeuges nach Anspruch 3, dadurch gekennzeichnet, daß eine Anzahl von mit radialen Bohrungen versehenen Scheiben aus geeignetem Werkzeugstahl nebeneinander fest, aber lösbar, auf eine rotierbaren Achse befestigt wird, der so gebildete Körper zu einem Rotationskörper zurechtgeschliffen oder -geschnitten wird, dessen Axialschnitt der dem Wabenkörper zu verleihenden Kontur entspricht, in die hierauf von der Achse abgenommenen einzelnen Scheiben Fräszähne eingeschliffen werden und die so hergeste ten Frässcheiben in der ursprünglichen Reihenfolge, vorzugsweise mit gegeneinander versetzten Zähnen, so auf einer hohlen, ebenfalls mit radialen Bohrungen versehenen Achse befestigt werden, daß die Bohrungen der Scheiben mit denen der Achse fluchten.

Vorrichtung zur Durchführung des Verfahrens nach den Ansprüchen 1 und 2 enthaltend einen auf einer Achse (6) rotierbaren Schleifkonus (10), dessen für die Bearbeitung bestimmte Oberfläche mit Körnern oder Splittern eines sehr harten Schleifmittels, vorzugsweise Diamantstaub besetzt ist, dadurch gekennzeichnet, daß die Unterseite des Schleifkonus (10) aus einer Anzahl von mit Schleifmittel besetzten Flächen (24) und abwechselnd zwischen diesen angeordneten wenigstens größenordnungsmäßig etwa gleich großen, etwas tiefer liegenden Flächen (25) besteht und mit einer Druckluftzuführung (16) verbundene Luftzuführungskanäle (26) in der Unterseite des Schleifkonus (10) münden.

Vorrichtung nach Anspruch 5 , dadurch gekennzeichnet, daß die Luftzuführungskanäle (26) in den schleifmittelbesetzten Flächen (24) münden.

Vorrichtung nach den Ansprüchen 5 und 6, dadurch gekennzeichnet, daß die Begrenzungslinien (27) zwischen den Flächen (24) und (25) in einem Winkel zu den Radien, der vorzugsweise 30$^o$ bis 45$^o$ beträgt, verlaufen.

Vorrichtung zur Durchführung des Verfahrens nach den Ansprüchen 1 und 2 enthaltend einen auf einer Achse (6) rotierbaren Winkelstirnfräser (10a), dadurch gekennzeichnet, daß mindestens in einem Teil der Lücken (29) zwischen den Zähnen (28) des Winkelstirnfräsers Bohrungen (30) angebracht sind, die an eine Druckluftzuführung angeschlossen sind.

Vorrichtung nach Anspruch 8 , dadurch gekennzeichnet, daß die Luftkammer (32) der Druckluftzuführung (31) als umlaufender Ring ausgebildet ist.

Vorrichtung nach den Ansprüchen 8 und 9 , dadurch gekennzeichnet, daß die Zähne 28 des Winkelstirnfräsers in einem Winkel zu den Radien angeordnet sind.

Fig. 1

Fig. 2

Fig. 3

Fig. 4

Fig. 5

26

24

26

26

25

26

24

25

Fig 6

6

16

25

26

10

24

Fig 7

0064573

Fig 8

6

30

28

Fig 9

6
31
32

10a

27

30  28       30 29

**0064573**

Nummer der Anmeldung

**Europäisches Patentamt**

## EUROPÄISCHER RECHERCHENBERICHT

EP 81 10 5772.8

| | EINSCHLÄGIGE DOKUMENTE | | KLASSIFIKATION DER ANMELDUNG (Int Cl ) |
|---|---|---|---|
| Kategorie | Kennzeichnung des Dokuments mit Angabe, soweit erforderlich, der maßgeblichen Teile | betrifft Anspruch | |
| A | US – A – 2 929 299 (C.H. JENKINS) <br> * Spalte 1, Zeilen 47 bis 61; Fig. 5, 6 * <br> –– | 1 | B 23 C 3/00 <br> B 24 B 1/00 <br> B 21 D 47/00 |
| A | US – A – 3 176 387 (L.M. ARGUESO et al.) <br> * Anspruch 1; Fig. 2 * <br> –– | 1 | |
| A | US – A – 2 855 664 (C.G. GRIFFITH et al.) <br> * Anspruch 1 * <br> –– | 1 | |

| | | | RECHERCHIERTE SACHGEBIETE (Int Cl ) |
|---|---|---|---|
| A | DE – C – 584 315 (P. ODZE) <br> * Seite 1, Zeilen 45 bis 74; Fig. 1, 2 * <br> –– | 5 | B 21 D 47/00 <br> B 23 C 3/00 <br> B 23 C 5/00 <br> B 23 Q 3/00 <br> B 23 Q 11/10 <br> B 24 B 1/00 |
| A | BE – A – 639 586 (A. LANZETTA) <br> * Seite 6, Zeilen 1 bis 8; Fig. 8 * <br> –– | 5 | B 24 B 41/06 <br> B 24 D 5/00 <br> B 24 D 7/00 |
| A | FR – A – 2 029 126 (S.A. DES ETABLISSE-MENTS BRISSONNEAU ET LOTZ) <br> * Ansprüche 1, 4, 5 * <br> –– | 8,9 | |
| A | Patent Abstracts of Japan, Band 1 Nr. 118, 8. Oktober 1977 <br> Seite 3786M77 <br> & JP – A – 52 – 55084 <br> –––– | | |

| | | |
|---|---|---|
| X | Der vorliegende Recherchenbericht wurde für alle Patentansprüche erstellt. | |
| Recherchenort | Abschlußdatum der Recherche | Prüfer |
| Berlin | 23-07-1982 | MARTIN |

EPA form 1503.1  06.78